Europäisches Patentamt

European Patent Office

Office européen des brevets

Publication number: **0 367 182**

**A2**

# EUROPEAN PATENT APPLICATION

Application number: 89120108.9

Int. Cl.5 **G06F 15/16**

Date of filing: **30.10.89**

Priority: **31.10.88 US 265425**

Date of publication of application:
**09.05.90 Bulletin 90/19**

Designated Contracting States:
**DE FR GB**

Applicant: **BTS BROADCAST TELEVISION SYSTEMS, INC.**
**Postfach 11 02 61**
**D-6100 Darmstadt(DE)**

Inventor: **Putnam, Leland K.**
**4585 Driftwood**
**Salt Lake City Utah 84123(US)**
Inventor: **Lucht, Philip H.**
**457 10th Avenue**
**Salt Lake City Utah 84103(US)**
Inventor: **Johnson, Kenneth C.**
**647 North 600 East**
**Bountiful Utah 84010(US)**
Inventor: **Pritchett, Scott K.**
**650 Jefferson Cove**
**Sandy Utah 84070(US)**
Inventor: **Foster, William, III**
**1216 Roosevelt Avenue**
**Salt Lake City Utah 84105(US)**

Representative: **Gornott, Dietmar, Dipl.-Ing.**
**Zilleweg 29**
**D-6100 Darmstadt 12(DE)**

## High-speed digital computing system.

A high speed digital computing system and method including a plurality of subsystems each including a digital processing device, the subsystems being arranged in a ring. Parallel data transfer interconnections are provided between each subsystem. The plurality of subsystems are closely coupled by an interface residing on each subsystem which functions to transfer data packets onto, and receive data packets from, the ring formed by the subsystems. Each subsystem may include a powerful microprocessor and a programmable hardware booster. The interface structure and operation allows packets of data to be exchanged between the subsystems rapidly and without any deadlock occurring. The described embodiments have the significant advantages of providing high speed computation, expandable to any size required by the user, and configurable to make the most efficient use of the embodiment. One particular application of the present invention is in a computer system adapted for carrying out computer graphics image computation tasks.

FIG. 1

# HIGH-SPEED DIGITAL COMPUTING SYSTEM

A. The Field of the Invention

The present invention relates to high speed digital computing system architectures and methods of transferring digital data between a plurality of processors. More particularly, the present invention is directed to a system and method for high speed digital computing which utilizes a novel system architecture comprised of a plurality of processors which are linked by parallel data transfer connections to form a ring, and wherein each processor of the ring is capable of asynchronous operation relative to the other processors of the ring.

B. The Background Art

Since the early commercialization of digital computers. increasing the speed and hence the "power" with which a computer can complete programmed operations has been a continuous goal of those seeking to improve computer performance. In contrast to the speed of operation of early digital computers, modern microprocessors are capable of carrying out millions of instructions per second ("MIPS"), and millions of floating point operations per second ("MFLOPS").

For example, in medical imaging applications, the high resolution graphical representation of the entire human body using volumetric data techniques requires the storage and manipulation of over 100 megabytes of digital data. In order to accommodate such requirements, more and more powerful digital computing systems have been devised. However, until the advent of the present invention, the creation of power digital computing systems has largely emphasized the MIPS and MFLOPS ratings of the system to the neglect of other important system attributes, such as expandability of the digital computing system. Furthermore, very few users can afford the high expense associated with acquiring computers having the necessary size and power to provide the MIPS and MFLOPS ratings which are desired for many of the more typically complex kinds of applications which require such ratings.

Such applications include, for example, theoretical modeling for prediction of weather patterns and earthquake occurrence, and generation of graphic images, particularly when the images are to be animated. The field of computer graphics is growing rapidly in all segments of modern society, including entertainment, science, industry, and military applications.

When the term "computer graphics" is used herein, it should be understood to include any application in which digital data is generated or manipulated to create a visually perceptible image. For example, computer graphics may involve digitizing an original real image and altering or manipulating the resulting digital data to produce a generated image different in some way from the original real image. However, it may also be that the image which is generated and presented to a user never existed previously except as a computer model consisting of data which was modeled, animated, and rendered to produce the final generated images.

Due to the demands of such applications, a single modern processor is unable to carry out instructions fast enough to complete many tasks within a reasonable amount of time. In an effort to increase the speed at which such applications can be completed, one solution has been to install a plurality of processors in a digital computing system and operate all of the processors concurrently in a parallel fashion. The application program which is run on such parallel processing systems is organized so that the program can be divided into many smaller processes and each process is assigned to run concurrently on a different processor.

If properly carried out, such parallel processing schemes may allow tasks to be completed in much less time than is possible with a single large processor, and with much less expense. Particularly in the case of high quality, high resolution graphic images, the number of calculations to be carried out is so great, and the amount of data to be manipulated so massive, that if generation and manipulation of computer graphics is to take place in real time, it is necessary to utilize a parallel processing computer architecture.

To date, a major limiting criteria of using multiple processors has been that the communication pathways between each of the processors limited the speed at which information could be transferred from one processor to another. Typically, such communication pathways are serial-type pathways which transmit analog signals which carry the digital information. Thus, while the individual processors may be able to complete their assigned processes in a desirably short time, when a processor needed to obtain data from memory, or when instructions or data is being distributed or collected among the processors, significant

EP 0 367 182 A2

slowing of the system's overall response is encountered.

Another significant problem which has not been satisfactorily resolved in connection with the use of multiple processors is that a digital computing system which utilizes multiple processors may become deadlocked if one of the processors attempts to transfer more data than can be accepted by the communication pathway at the time.

Another design approach, particularly in computer systems designed for producing graphic images, has been to utilize highly specialized hardware designed just for the purpose of generating computer graphics. However, a significant disadvantage of this approach is that such specialized hardware is often incompatible with other manufacturers' hardware or is unable to emulate other manufacturers' systems or resulting images.

Moreover, computer systems utilizing hardware dedicated to performing a highly specialized task such as computer graphics tend to be relatively inflexible and not very adaptable to varying needs of the user. For example, such dedicated hardware may unalterably allocate one quarter of its resources to performing modeling tasks, one half of its resources to animation tasks, and the remaining resources to rendering tasks. Significantly, the needs of the user often do not match the allocation of system resources. Furthermore, the dedicated hardware used in such systems tends to became obsolete soon after its release due to the rapid changes occurring in this art.

OBJECTS AND BRIEF SUMMARY OF THE INVENTION

In view of the foregoing, it is a primary object of the present invention to provide a high speed digital computing system and method which exhibits improved performance characteristics over the prior state of the art when used for applications requiring that a large number of instructions and/or data be processed by multiple processors.

Another important object of the present invention is to provide a high speed digital computing system and method wherein a plurality of asynchronous subsystems are connected by parallel data transfer connections to form a ring, and wherein data which is input to or output by any subsystem of the ring is configured in data packets which are limited in size such that the subsystems of the ring are inherently prevented from experiencing a deadlocked condition.

It is another object of the present invention to provide a novel digital computing system which incorporates an improved high speed digital information exchange pathway whereby a plurality of subsystems may rapidly and efficiently communicate with each other.

It is a still further object of the present invention to provide a high speed digital computing system which allows subsystems to be readily added to, or removed from, the system so as to improve the system's adaptability to a wide variety of applications.

It is yet another object of the present invention to provide a high speed digital computing system and method which may incorporate a large number of subsystems and which allows the subsystems to be assigned to differing tasks as the needs of the user change.

Still a further object of the present invention is to provide a high speed digital computing system and method wherein data exchanged between subsystems in a multiprocessing environment is continuously monitored to insure that the data is either confirmed as received or not received when it is sent from one subsystem to another, so that if confirmation of one of those two conditions is not obtained due to a faulty subsystem, the system automatically identifies and bypasses the faulty subsystem.

It is yet another object of the present invention to provide a high speed digital computing system and method wherein each subsystem includes digital processors capable of operating asynchronously from other processors in the system.

These and other objects of the present invention will become more fully apparent from the following description and claims, or may be learned by practicing the invention disclosed herein.

Briefly summarized, the system and method of the present invention are based upon a novel high speed digital computing system architecture comprised of a plurality of subsystems which are connected together by parallel data transfer connections so as to form a ring. The parallel data transfer connections permit packets of entire words and control bits to be simultaneously transferred between subsystems, rather than requiring serial transmission.

One of the subsystems connected into the ring of subsystems may comprise a controller which functions as an insertion and extraction point for information that is to be exchanged between the ring of subsystems and an external computer, and/or other peripheral devices. The other subsystems may

3

comprise a plurality of identically configured computational subsystems which are utilized for data processing. Each subsystem can also be connected to other peripheral devices or systems outside of the ring, to permit data transfer directly between a subsystem and such other peripheral devices or systems.

Each of the subsystems is comprised of a digital processor with its associated memory circuits and appropriate circuitry for interfacing the processor to the ring. Each of the processors is capable of asynchronous operation. Thus, when one processor in the ring is finished with a task, it can dispatch the results of its work to another processor on the ring for completion of a different task, or to a external computer or to a peripheral device, without waiting for any other processor of the ring to complete its immediate task.

The interface circuitry of each subsystem is designed so that information input onto the ring and passed between one or more of the subsystems of the ring is configured in "packets" (e.g., groups of data words) which are defined in terms of their size based upon the size of the subsystem contribution of memory to the ring. The packet size is limited in order to insure that no subsystem can output a data packet onto the ring which is larger than the amount of memory contributed to the ring by that subsystem. This advantageously insures that a deadlocked condition on the ring cannot occur wherein a subsystem tries to insert a data packet onto the ring which is larger than the available space for the packet on the ring due to a very large packet already traveling on the ring and addressed to the subsystem trying to input a data packet onto the ring.

The interface circuitry of each subsystem is further designed so that it may be determined whether a particular packet on the ring is addressed to that subsystem; if not, the data packet is then passed to the next subsystem in the ring and so on until it reaches the correct subsystem to which the data packet is addressed. Data packets which are input by a subsystem to the ring are synchronously passed between subsystems on the ring. By synchronizing the transfer of data packets from one subsystem on the ring to the next, the flexibility of the architecture is improved because additional subsystems can be added to the ring without necessarily limiting the number of such subsystems which can be added.

The system architecture of the present invention is also designed so that as a data packet is received by the subsystem to which it is addressed, an "acknowledge" signal is returned to the subsystem from which the data packet was input onto the ring. However, if the addressed subsystem is busy, a "not acknowledged" signal is returned to the subsystem from which the data packet originated. If the data packet is passed around the ring a predetermined number of times and neither an "acknowledge" or a "not acknowledged" signal is received by the originating subsystem, it is then determined that the subsystem to which the data packet was addressed has failed and the external computer is made aware of the failure so that action may be taken to circumvent the failed subsystem by bypassing it. This enhances system reliability.

## BRIEF DESCRIPTION OF THE DRAWINGS

In order to more fully understand the manner in which the above-recited advantages and objects of the invention are obtained, a more particular description of the invention will be rendered by reference to specific embodiments thereof which are illustrated in the appended drawings. Understanding that these drawings do not depict all possible embodiments of the invention and are therefor not to be considered limiting of its scope, the presently preferred embodiments and the presently understood best mode of the invention will be described with additional detail through use of the accompanying drawings, in which:

Figure 1 is a high level block diagram schematically representing the general architecture of the present invention, and also illustrating as an example, use of the digital computing system and method of the invention in the environment of a digital graphics system.

Figure 2A is a high level block diagram schematically representing the principal functional design of the computational subsystems illustrated in Figure 1.

Figure 2B is a high level block diagram schematically representing the principal components of one presently preferred embodiment of the subsystem interface utilized by each subsystem represented in Figure 1.

Figures 3A and 3B are detailed schematic diagrams of the subsystem interface which illustrate one specific example of the implementation of the inventive concepts more generally shown in Figures 1, 2A, and 2B.

Figures 4A - 4C are state diagrams for the input arbitration state machine and output arbitration state machine of the subsystem interface of Figures 3A-3B.

Figure 5 is a timing diagram illustrating the relationship of the clocks and timing signals used in the state machines represented in Figures 3A and 3B and in the nomenclature used in the state diagrams represented in Figures 4A-4C.

## DETAILED DESCRIPTION OF THE PREFERRED EMBODIMENTS

In the following description, reference will be made to the drawings wherein like structures are provided with like reference characters. Furthermore, it will be appreciated that the description of the presently preferred embodiment provided below is intended to set forth the presently believed best mode of carrying out the present invention and is not intended to limit the scope of the invention as defined in the claims.

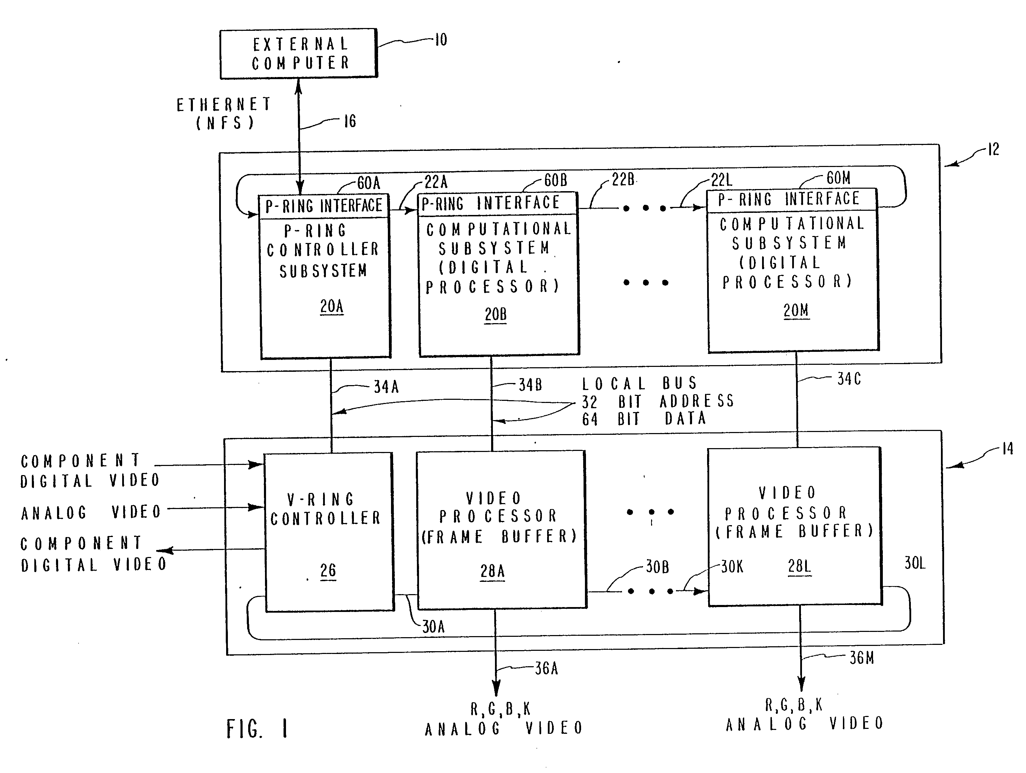

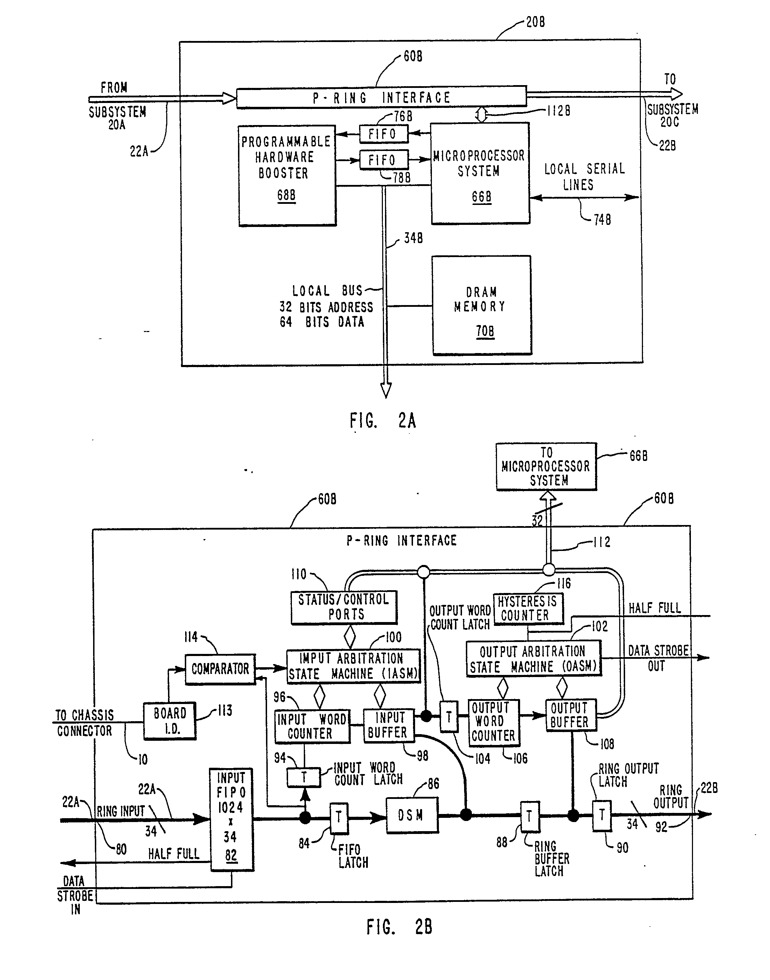

A. Description of the Basic Inventive Concepts Represented in the System and Method of the Present Invention: Figures 1, 2A, and 2B.

As is known in the art, in order to increase the processing speed of a computer system. a parallel processing architecture is often adopted. However. prior to the present invention. the multiple processors of many computer systems were not closely coupled. but were interjoined by slow networks or some other system using commonly available communications protocols. Such previously available interprocessor communication networks present a bottleneck to increasing processing speeds of systems using a plurality of parallel processors.

Moreover, prior art computer systems lack configurability. That is, due to the architecture of the prior art computer systems, it is difficult to efficiently assign various tasks to different processors.

Thus, the present invention provides, among others, three advances over the prior art. First, the present invention closely couples a plurality of processors. Second, the present invention provides for the expandability of the computer system. Also, the present invention provides for configurability, that is, embodiments incorporating the present invention are flexible and versatile enough to be efficiently adapted to varying number of tasks.

Provided in Figure 1 is a block diagram which will be used to describe the general inventive concepts of the present invention. It will be understood that the representation provided in Figure 1 is greatly simplified so as to allow a clear description of the inventive concepts of the present invention.

As shown in Figure 1, the embodiment includes a processor ring, contained within box 12, herein referred to as a P-ring which includes a plurality of subsystems 20A - 20M. Subsystems 20B - 20M are preferably computational subsystems and may comprise only a single digital microprocessor or some other digital computing device. Preferably, however, each computational subsystem 20B - 20M illustrated in Figure 1 includes a powerful digital computing system which will be more fully described shortly. P-ring controller subsystem 20A may be identical to the other subsystems 20B - 20M on the P-ring 12 or may include just a P-ring interface 60A and a digital processing element associated with the P-ring interface 60A.

Each P-ring interface 60A - 60M functions to closely couple all of the subsystems together so that rapid and efficient communication between all of the subsystems 20A - 20M can occur. Importantly, as suggested in Figure 1, any number of subsystems 20A - 20M may be installed on the P-ring 12, each subsystem 20A - 20M including a P-ring interface 60A - 60M. It is preferred, but not necessary, that each subsystem 20A - 20M is provided on an individual circuit board each of which is installed in a chassis and which are interconnected by way of a backplane connector.

The components of the P-ring communicate with an external computer 10 by way of an communications network such as the Ethernet (NFS) communication network 16. It will be appreciated that other methods of providing communication between the external computer 10 and the P-ring 12 can be provided.

Importantly, the subsystems 20A - 20M on the P-ring 12 are closely coupled by the communication links or interconnections 22A - 22M provided between each of the subsystems 20A - 20M. The interconnections 22A - 22M between each computational subsystem is a high speed parallel data pathway.

The structure and protocol of the P-ring 12 importantly prevents any deadlock condition from occurring on the P-ring 12. Thus, the structure and the protocol of the P-ring 12 provide that data can be transferred from one computational subsystem to any other computational subsystem quickly and efficiently. The close coupling of subsystems 20A - 20M by the P-ring interfaces 60A - 60M and the interconnections 22A - 22M provides that communication between processors is not a bottleneck to rapid overall completion of computation tasks.

5

It should be noted that the organization and protocols of the P-ring 12, P-ring interfaces 60 - 60M and the subsystem 20A - 20M have application in many different areas. However, due to the efficient operation of the P-ring 12, it is particularly adapted for carrying out computer graphics image computation tasks when organized as shown in Figure 1.

In order to best carry out computer graphics computation tasks, Figure 1 also illustrates the components which comprise the V-ring contained within box 14. The V-ring 14 is included in Figure 1 to facilitate describing some of the functions and benefits of the P-ring architecture. The V-ring 14 includes a V-ring controller 26 and a plurality of video processors 28A - 28L and the parallel communication paths 30A - 30N therebetween.

Complete information concerning the V-ring 14 and a computer graphics system which utilizes the present invention to great advantage can be found in the Patent Application entitled "System and Method for High Speed Computer Graphics Image Computation" filed concurrently herewith as European Patent Application No. , which is hereby incorporated herein by reference.

Significantly, a plurality of local buses 34A - 34M are provided which interconnect the devices on the P-ring 12 with the devices on the V-ring 14. Thus, data may be passed around the P-ring 12 or from one of the subsystems 20A - 20M to the V-ring 14. It will be appreciated that the P-ring 12 may be used alone or combined with structures other than the V-ring 14 depending upon the particular application.

Communications between the subsystems 20A - 20M on the P-ring 12 are packetized and the transfer of the packets synchronized only from one P-ring interface, for example 60A, to the adjacent downstream P-ring interface, for example 60B. Thus, any number of subsystems may be joined to form the P-ring 12. As a result of the independent operation of each of the subsystems 20A - 20M, long periods of time may pass between a particular subsystem 20A - 20M inserting a packet onto, or removing a packet from, the P-ring 12. Nevertheless, the organization and protocols used in the P-ring 12 provide that maximum efficiency of communication between the subsystems 20A - 20M occurs and that a deadlock condition on the P-ring 12 is always avoided.

Representative of the subsystems 20B - 20M on the P-ring 12, the principal components of subsystem 20B are represented in Figure 2A. As Figure 2A makes clear, subsystems 20B - 20M on the P-ring 12 are appropriately referred to as computational subsystems since each of these subsystems include a powerful digital computer. In contrast, subsystem 20A, or the P-ring controller subsystem may include all of the structures represented in Figure 2A but preferably includes just the P-ring interface 60A, a microprocessor system (66B in Figure 2A), and the components which allow the P-ring controller system to interface to external devices, such as the external computer 10 represented in Figure 1. Preferably, each computational subsystem 20A - 20M is identical to all other computational subsystems on the P-ring. Thus, the system is configurable, that is, or or more tasks may be assigned to any one, or a group of, the computational subsystems 20A - 20M.

Each subsystem 20A - 20M, or subsystem means, may include a variety of digital processor means, such as a microprocessor or other devices. Many different types of processor means may be included in the subsystem depending upon the application and demands of the system. Each subsystem 20A -20M on the P-ring also includes a preferably identical P-ring interface 60B, or interface means 60B, and the interconnecting parallel communication paths 22A and 22M (Figure 1) serve as a ring connection means to link each subsystem to the adjacent subsystems to form a ring. It will be appreciated that many different structures may serve the function of the interface means and the ring connection means. Thus, the described embodiment is only exemplary of the presently known best mode of carrying out the invention and many devices and structures devised to carry out the same or equivalent functions may serve as the ring connection means and the ring interface means.

The bulk of data (which include both commands, program code, as well as data which which is to be manipulated) is inputted to, and outputted from the computational subsystems by way of the P-ring. However, noted in Figure 2A, serial communication lines 74B are also provided to each computational subsystem for communication to the external devices. The P-ring interface 60B allows the transfer of data between the P-ring and the remainder of the computational subsystem represented in Figure 2A.

As illustrated in Figure 2A each of the computational subsystems includes those components necessary to provide a powerful digital computational system. As represented in Figure 2A, each computational subsystem 20B - 20M is provided with a microprocessor system or processor means 66B, a parallel bus 112B connecting the P-ring interface 60B to the microprocessor system 66B, first-in/first-out buffers 76B and 78B, a programmable hardware booster 68B, a substantial amount of DRAM memory means 70B or processor memory means, as well as a local bus 34B including 32 bits of address and 64 bits of data. In the example represented in Figure 1, the local bus 34B leads to a component on the V-ring and allows communication between the P-ring and the V-ring.

The microprocessor system 66B included on the presently preferred embodiment of the computational subsystems (20B -20M in Figure 1) is a Motorola MC 68020 microprocessor. Those skilled in the art will recognize that the MC 68020 microprocessor is a high performance general purpose microprocessor. The MC 68020 microprocessor is capable of performing useful work on its own and communicates with the outside world by way of the P-ring. Being a general purpose microprocessor, the MC 68020 may be adapted to many different types of processing requirements.

Importantly, in many computation intensive applications, such as computer graphics applications, ninety percent of the computation time is spent in just ten percent of the programming code. Thus, a programmable hardware booster 68B is provided to complement the computational capacity of the MC 68020 microprocessor.

With the addition of the programmable hardware booster 68B, computation-intensive pieces of programming code can be moved into the hardware booster 68B as needed. Once a subroutine or portion of programming code is moved into the hardware booster 68B, it is treated just as before except it runs much faster is than possible on the MC 68020 microprocessor. Thus, the programmable hardware booster section is given access to the same DRAM memory 70B as the MC 68020 by way of the local bus 34B.

The ability to move computational-intensive portions of programming code to the hardware booster section insulates the software system against rapid changes in technology. A redesign of the hardware booster section only requires porting of the existing hardware booster routines to the new redesigned booster section, leaving the bulk of the application code unaffected.

It is preferred that the microprocessor included in the microprocessor system 66B of the computational subsystem 20B is accompanied by a Motorola MC 68881 floating point compressor as well as a Motorola MC 68851 memory management unit.

It is also preferred that the operating system used with the presently preferred embodiments is UNIX (available from American Telephone and Telegraph) or a modification of UNIX. At boot time, the operating system is downloaded from at least one UNIX compatible work station (such as the external computer 10 in Figure 1), preferably by way of the Ethernet network and is distributed to each computational subsystem on the P-ring. The work stations described herewith may be one of many available from various manufacturers and suppliers. It is preferred that the work station carry out tasks such as general file maintenance, editing, compiling, and debugging application software, thus leaving the embodiments of the invention to perform computation tasks for which it is best adapted.

The programmable hardware booster 68B represented in Figure 2A may be best described as a "micromachine." Those skilled in the art will be able to design or obtain suitable computing devices capable of being organized to fulfill the function of the micromachine as previously described. It will also be appreciated that it is preferred that the greatest advantage of the micromachine performance is obtained by programming the same in assembly language or, alternatively, another higher level language which preferably maintains the efficiency of the micromachine performance.

It is presently preferred that amount of DRAM memory 70B associated with each computational subsystem is at least eight megabytes, and depending upon performance requirements and economic considerations, may be up to one gigabyte. As future advances in the art allow denser memory devices to be produced, these denser memory devices can be readily included in the embodiments of the present invention as expansions of the originally acquired embodiment.

Since it is essential to closely couple the subsystems incorporated into embodiments of the present invention so that rapid and efficient communication between the subsystems themselves and the outside world can occur, reference will next be made to Figure 2B to describe the organization and protocol of the P-ring itself and the P-ring interface provided at each computational subsystem.

Figure 2B provides a block diagram which will be used to describe the high level functions of the P-ring interface 60B contained on subsystem 20B. Preferably, each subsystem included in the P-ring includes an identical P-ring interface. The functional blocks of the P-ring interface 60B may represent many different structures which carry out functions which are equivalent to those described herein. Thus, the organization of, and the devices used in, the P-ring interface are expected to vary from those described herein as advances in the art occur and as embodiments are adapted for particular applications. Still, these other organizations and devices are to be considered within the scope of the present invention if they serve the same or equivalent functions as the interface means.

The P-ring interface 60B controls the insertion and removal of packets of data which travel from one subsystem to the adjacent downstream subsystems. There is no theoretical limit to the number of subsystems provided on the P-ring since each P-ring interface output 92 only drives the adjacent ring interface input 80. Also, each P-ring interface operates asynchronously to all other P-ring interfaces. In practice, however, the number of subsystems added to the P-ring reaches a point at which performance is no longer linearly increased, depending upon the application, as subsystems are added to the ring.

Each P-ring interface consists of a P-ring input 80, an input FIFO 82, an input arbitration state machine (herein-after referred to as the IASM) 100, an output arbitration state machine (hereinafter referred to as the OASM) 102, a P-ring output 92, as well as a status control ports 110.

In operation, the P-ring interface 60B will either (1) pass a packet of data through from its ring input 80 to its ring output 92; (2) input a packet of data received at the P-ring input 80 to the microprocessor system of the subsystem; or (3) output a packet of data from the microprocessor system to the P-ring output 92.

The P-ring interface 60B represented in Figure 2B allows the plurality of subsystems to be closely coupled. That is, the subsystems may rapidly and efficiently communicate with each other and with the outside world. Without such close coupling, efficient communication between the subsystems could not take place.

Another important concept inherent in the structure and operation of the P-ring is that no P-ring interface is allowed to output a packet onto the P-ring which is any larger than the amount of memory which the P-ring interface contributes to the P-ring. As shown in Figure 2B, a 1024 x 34 input FIFO memory 82 (1024 32 bit words accompanied by 2 control bits) comprises the P-ring interface's memory contribution to the P-ring in the presently preferred embodiment of the present invention. It will be appreciated that while use of the 1024 x 34 input FIFO memory 82 (shown in Figure 2B) is preferred in this embodiment, other structures accomodating different word widths and packet lengths may be utilized in other embodiments of the present invention.

The P-ring interface, as will become clear later in this disclosure, will never output onto the ring or packet larger than 1024 words. Input FIFO 82 serves the function of an input storage means and it will be appreciated that many different memory devices and structures other than a FIFO memory device may perform the same or equivalent functions of an input storage means of which the input FIFO 82 is one example.

The present invention also provides that the plurality of interconnections, or ring connection means (22a and 22B being represented in Figure 2B), between subsystems on the P-ring are provided which function to transfer data in a parallel mode. In the P-ring interface 60B embodied in Figure 2B, the input FIFO 82 is 34 bits wide by 1024 bits deep. Likewise, the plurality of interconnections 22A and 22B interacting adjacent P-ring interfaces is 34 conductors wide. The parallel transmission of data between computational subsystems is essential to the rapid transfer of data therebetween. The parallel structure of the P-ring is in contrast to conventional architectures and networks which utilize a serial data transmission mode and often slow protocols.

The first word of each packet contains the address of the source in addition to the address of the intended destination. The bits of the first word of a packet which represent the destination of the packet are compared by a comparator 114 associated with the IASM to determine whether the data packet should be passed along to the adjacent computational subsystem or input, or perhaps both. The IASM is programmed so that if the input buffer 98 is already busy or input to the microprocessor system is disabled, all packets will be passed unconditionally.

The IASM 100 represents the primary component of the input control means of the illustrated embodiment. When performing the function of determining whether the data packet is addressed to the subsystem, the comparator 114, and the Board Identifier (I.D.) 113 cooperate with the IASM 100 to perform the input control means function. It will be realized that both the IASM 100 and the OASM 102 may be implemented in many different ways, such as with individual logic devices or other programmable devices now available, or which become available, and serve functions which are the same as, or equivalent to, those functions necessary to the P-ring interface.

The second word of a packet contains a "trip count." Represented in Figure 2B is a decrement state machine (DSM) 86. While every P-ring interface preferably includes a decrement state machine 86, only one decrement state machine is active on the P-ring at a time. The function of the decrement state machine 86 is to decrement the trip count word in every packet it receives. When the trip count reaches zero, the packet is removed from the P-ring and the failure of the packet to be received by the destination address is noted to the originating, or source, subsystem. Thus, the decrement state machine serves as a means for monitoring the number of times a packet travels around the P-ring.

If the packet is addressed to the particular interface/subsystem, i.e., 60B, the IASM 100 will, if possible, input the packet to the microprocessor system 66B. The IASM 100 will also flag the OASM 102 whenever a packet is detected which must be passed through the subsystem to a downstream subsystem. The OASM 102 then coordinates the passing of the packet along on the P-ring to the next subsystem.

When the microprocessor system 66B desires to output a packet onto the P-ring, the OASM 102 inserts the packet onto the P-ring and synchronizes the passing of the packet to the adjacent downstream

EP 0 367 182 A2

subsystem, i.e., to subsystem 60C.

The P-ring interface 60B may be enabled to interrupt the microprocessor 66B when a packet has been removed from the P-ring. Preferably, all internal operations of the P-ring interface 60B are invisible and unobtrusive to the microprocessor system 66B. A simple handshaking mode is preferably provided by a direct memory access-like read and write operation between the microprocessor system 66B and the P-ring interface 60B.

Input and output connections of the P-ring interface can be roughly divided into three types: P-ring input 86, P-ring output 92, and microprocessor system bus 112.

The P-ring input consists of a 32-bit wide bus and two flag control lines (to indicate the beginning and the end of a packet and which arrive coincidentally with a first and last word, respectively, of each packet) making the width of the P-ring equal to a total of 34 bits. Other inputs, which are primarily control signals and not represented in Figure 2B but will be described later in this disclosure, include a "data input strobe" to strobe the ring input data into the input FIFO 82, and a clock for synchronizing input and output state machines.

The P-ring output 92 connections consist of a thirty-two bit bus and the packet start and end flag lines previously described. Each P-ring interface also outputs a "data output strobe" which becomes the "data input strobe" on the adjacent downstream P-ring interface and outputs an "input FIFO half-full flag" to be asserted when the input FIFO 82 is half full. Other control signals are also output as will be explained later in this disclosure.

The microprocessor bus 112 consists of a thirty-two bit bidirectional data bus as well as other control signals involving the status control ports represented in Figure 2B at 110. The signals present at the status control ports are well known to those skilled in the art and include encoded read-and-write control signals, interrupt request and acknowledge signals, hardware reset input, and miscellaneous other status and control signals. In order to most clearly describe the remaining structures illustrated in Figure 2B and to explain the operation of the P-ring interface, the steps carried out during (1) outputting a packet onto the P-ring, (2) receiving a packet, i.e., inputting to the microprocessor from the P-ring, and (3) passing a packet along to the adjacent downstream subsystem will each be explained.

In the following explanation of each of the three mentioned operations, it will be assumed that no packets have yet been output onto the P-ring and thus all operations may be carried out without hinderance.

The operation of outputting a packet onto the P-ring will be described first. The microprocessor system 66B first interrupts the P-ring interface 60B to begin the output operation. The microprocessor also loads the output word counter 106 with a value that is one less than the actual word count of the packet to be transmitted. The output arbitration state machine (OASM) 102 then initiates an output buffer access mode, allowing the MC 68020 processor to write directly to the output buffer 108. Each word written to the output buffer 108 decrements the output word counter 106. When the output word counter 106 reaches zero, the OASM 102 will terminate the output buffer write mode.

Importantly, the output buffer 108, or output buffer means, has a storage capacity not any greater than the input FIFO 82. This attribute prevents a packet from being larger than the P-ring interface's contribution to the memory of the P-ring and avoids the condition where a deadlock might occur on the P-ring.

After the OASM 102 has terminated the output buffer write mode, the OASM 102 then monitors the P-ring to see if the P-ring is busy with a packet pass-through. Should the P-ring be busy with a pass-through, outputting of the new packet will begin as soon as pass-through is completed. Should there be a tie between the output request and the pass-through request, the OASM 102 will always allow the output function to take priority to ensure the output function cannot be locked out by an over-active ring.

If the ring is not busy, the OASM 102 initiates the packet output sequence by inserting the beginning of packet and end of packet flags in their proper places. The OASM 102 does this by reloading the "word count minus one" value, which has been previously stored in the output word count latch 104, which is a transparent latch as are all the latch devices represented in Figure 2B, into the output word counter 106. The first word of the packet and the beginning of the packet flag is placed into the ring output latch 90 and this data is latched while at the same time a data output strobe signal is generated by the OASM 102 to travel by way of a data strobe out line to the adjacent downstream P-ring interface to strobe the packet into the next input FIFO 82. The characteristic of transmitting a data strobe out signal with each bit of the data packet is one of the attributes that allows the P-ring to have no theoretical size limitation.

Should the destination P-ring interface input FIFO 82 become half full at any time during the transmission of a packet, a half-full signal is enabled and the hysteresis counter 116 is enabled. The hysteresis counter 116 is clocked by the data output strobe signal. As represented in Figure 2B, the input FIFO 82 generates the half-full signal which is applied to the hysteresis counter 116 and the OASM 102

9

which together function as the preferred mode of the carrying out a means for communicating a status signal conveying the status of the input FIFO.

Should the hysteresis counter 116 reach a terminal count before the half full indication is negated, all output functions cease until the half full flag is negated. This procedure ensures that no data is lost during transmission from one P-ring interface to another P-ring interface. In this way, the entire packet is transmitted to the input FIFO 82 on the adjacent downstream P-ring interface.

Continuing to refer to Figure 2B, when receiving a packet, the following procedure is preferably followed. As soon as the input FIFO 82 contains any data, the status is read by the IASM 100. The IASM 100 then causes the first word of the packet to be read from the input FIFO 82 and stored in the FIFO latch 84. Utilizing the FIFO latch 84 permits passing of the packet if the packet destination address contained in the first word does not match the address given to the particular P-ring interface and no other conditions dictate that reception of the packet should be completed. When the input buffer 98 is not empty, all packets in the input FIFO 82 are passed around the P-ring until the input buffer 98 is available.

As the first word is presented at the output of the input FIFO 82, it is allowed to pass through the now transparent FIFO latch 84. The output of the FIFO latch 84 is then passed through the decrement state machine (DSM) 86 and presented to the data input of the input buffer 98 and the input of the ring buffer latch 88. A portion of this first word (nine bits which indicate the size of the packet) is presented to the input word count latch 94. The output of the input word count latch feeds the input of the input word counter (a nine-bit down counter) 96 used to address the input buffer 98. It is the remaining bits of this first word which is the destination address that is is presented to the input of the ten-bit comparator 114.

The other input to the comparator 114 is the board identifier (I.D.) 113 of the board on which the P-ring interface is installed. The result of this comparison is passed to the IASM 100 to determine the next required state.

As the read cycle ends, a write strobe signal is generated to latch this word of the packet into the input buffer 98 at the address which is equivalent of the "word count minus one." The word count is latched into the input word count latch 94 as the first word is latched into the FIFO latch 84 and ring buffer latch 88.

If the destination address of the packet compares with the word address, the IASM 100 enters a state which reads the entire packet into the input buffer 98. As each word is enabled from the input FIFO 82 and strobed into the input buffer 98, the input word counter 96 is decremented. The input word counter value is used to generate the input buffer address.

When the IASM 100 detects the end-of-packet bit and/or the input word counter 96 reaches zero, the input cycle is terminated. Both of the aforementioned status indications should occur simultaneously. Should either of the aforementioned status indications be missing, an error flag is set.

When the input cycle terminates, a bit is set in the status/control ports 110 and an interrupt to the microprocessor is generated to indicate that a packet resides in the input buffer 98. In addition, the IASM 100 reloads the "packet word count minus one" value into the input buffer word counter 96 and issues a pass-through request to the OASM 102 which remains active until the microprocessor has completely read all data from the input buffer 98 and terminated the microprocessor read cycle.

The microprocessor read cycle begins by the processor scanning to read data from the input buffer 98. With each read strobe from the microprocessor, the IASM 100 causes a decrement in the input buffer word counter 96. The microprocessor may count the words it receives or monitor the input buffer word counter 96 to determine when the input word buffer is full.

If the destination address of the data packet does not compare with the address of the P-ring interface 60B, i.e., the packet was not intended for that particular subsystem, the IASM 100 enters a state which will read the second word of the packet out of the input FIFO through the FIFO latch 84 and into the DSM 86. This "trip count word" is decremented once each time it passes completely around the ring. The decrement state machine (DSM) 86 preferably resides on every P-ring interface 60B but is active only on one P-ring interface in the P-ring, on all others it is transparent. Preferably, the active decrement state machine (DSM) 86 resides on the P-ring controller subsystem 20A. The decrement state machine 86 is enabled only when the second packet word is present on the FIFO latch output 84. The decremented second word of the packet is strobed into the input buffer 98 and latched into the FIFO latch 84 at the end of this state. In the described embodiment, if the value of the decremented second word of a data packet is zero, then the IASM 100 on the P-ring interface on which the active decrement state machine 86 resides enters a state which reads the entire data packet 86 into the input buffer 98.

When the input buffer 98 is not empty, no packets can be received on the P-ring interface 60B. Under these conditions, all packets detected in the input FIFO 82 are passed through the P-ring interface 60B to the adjacent downstream P-ring interface, e.g., 60C. The status of the input buffer 98 is checked every time a new packet is detected. Packets continue to be passed until the input buffer 98 is available. The P-ring interface 60B always passes entire packets; that is, unless the input buffer 98 is entirely empty, a packet will always be passed.

The OASM 102 handles all arbitration for output to the P-ring. The IASM 100 issues a pass-through request to the OASM 102 whenever it cannot input a packet to the input buffer 98 and onto the microprocessor. As long as this request is active, the OASM 102 takes control of all clocking and polling of the input FIFO 82. When the OASM 102 is not outputting a new packet onto the P-ring, pass-through is possible. In this mode, the OASM 102 must determine whether the IASM 100 has extracted any of the packet from the input FIFO 82.

If the IASM 100 has extracted any of the packet from the input FIFO 82, then the output of the ring buffer latch 88 will contain a "beginning of packet flag bit" and the OASM 102 will know that the second word of the packet is latched into the FIFO latch 82. If this is the case, the OASM 102 will strobe these two words into the ring output latch 90 and onto the adjacent P-ring interface before anymore words are extracted from the input FIFO 82.

Should the word in the ring buffer latch 88 not have a beginning of packet flag bit, the OASM 102 will read words from the input FIFO 102 until it detects a beginning of packet flag bit indicating the first word of a packet. The OASM 102 will then begin strobing the contents of the input FIFO 82 into the ring output latch 90 and generating the required output strobes to accompany the data. This cycle will continue until the pass-through request is negated. When this occurs, the OASM 102 will complete the passing of any packet already in progress before returning control of the input FIFO 82 back to the IASM 100.

It will be appreciated that by using the described P-ring interface, a P-ring may be formed which may be easily expanded to include a large number of computational subsystems. Furthermore, because of the structure and operation of the P-ring, a deadlock condition on the ring cannot occur and thus rapid and error-free exchange of information among the processors can take place.

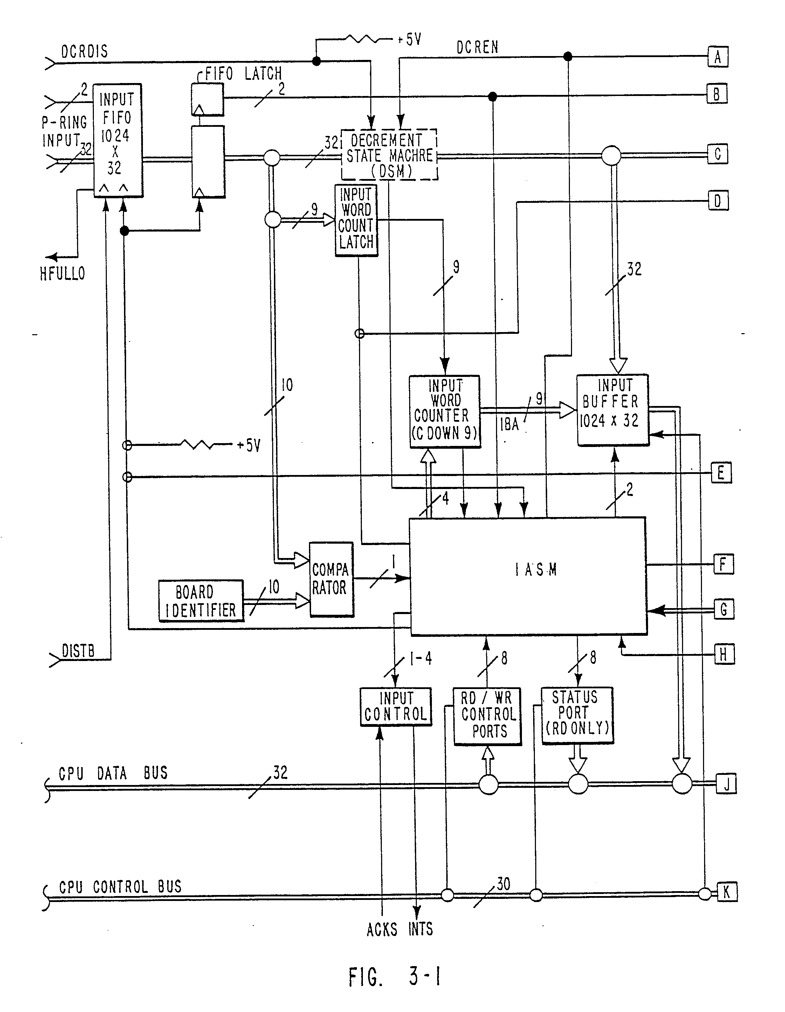

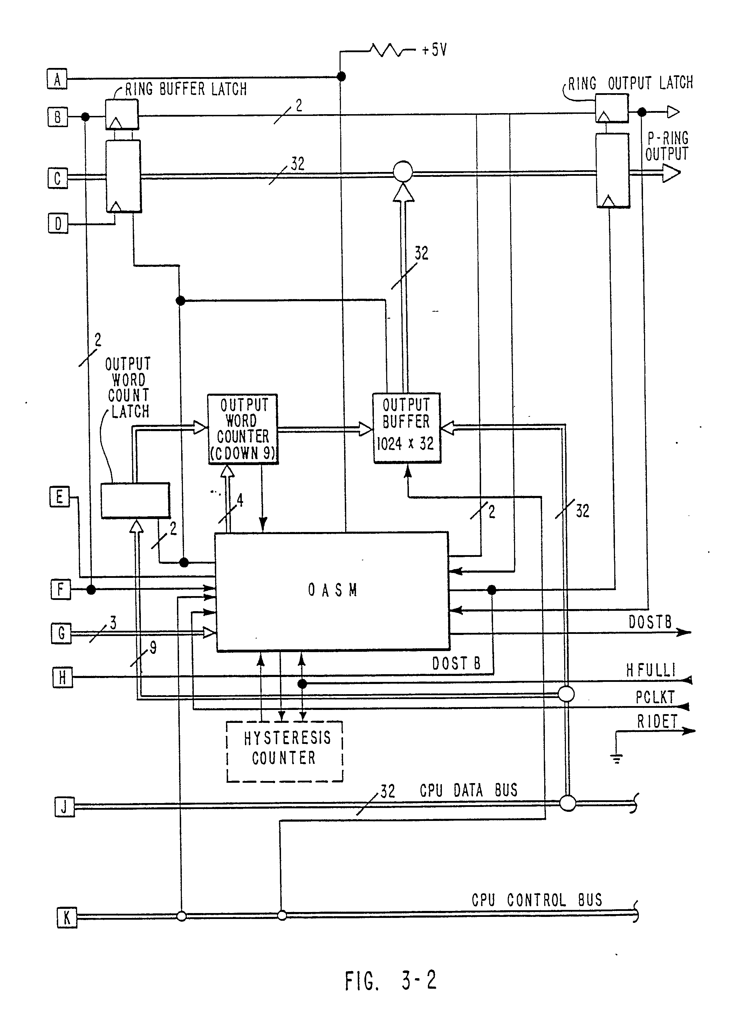

B. The Presently Preferred Embodiment and Best Mode For Implementing the System and Method of the Invention: Figures 3A-5.

Figure 3, which has been divided into two parts, 3-1 and 3-2, provides a block diagram illustrating the structures and organization of one representative embodiment of the P-ring interface generally following the structure shown in Figure 2B. The component and bus designations commonly used in the art have been retained in Figure 3 in order to provide maximum clarity to those skilled in the art. It will be appreciated that it is possible to incorporate the inventive concepts as defined in the claims into structures and organizations other than those illustrated in Figure 3. In order to provide maximum versatility, it is preferred, but not required, that the components represented in Figure 3 be assembled on a P-ring interface circuit board for inclusion into a computer system.

As explained earlier, the organization of the P-ring allows the multiple computational subsystems of the presently preferred embodiments to rapidly communicate with each other and with the outside world. Advantageously, the organization of the P-ring allows almost any number of additional processors or computational subsystems to be added to the P-ring. In other words, the P-ring architecture both closely couples the components on the P-ring and also allows a high degree of expandability.

1. P-Ring Input

The P-ring input connections consist of a 32-bit data bus and two flags to indicate the beginning and end of a packet which arrive coincidentally with the first and last word, respectively, of each packet. Other inputs, which are primarily control signals, include an input strobe (DISTB) to strobe the ring input data into a 1024-word deep input FIFO, a clock for synchronizing input and output state-machines. Another input, indirectly related to the input data, is a 10-bit board identifier, the use of which will be explained shortly. Also provided is a FIFO "half-full" flag output (HFULLO) which is generated by the input FIFO.

2. P-Ring Output

The ring output connections consist of a 32-bit data bus and, similarly to the P-ring input, two flags to indicate the beginning and end of a packet, arriving coincidentally with the first and last word, respectively, of each packet. Another output includes the output data strobe (DOSTB) which becomes the input strobe (DISTB) for the adjacent downstream P-ring interface. A FIFO "half-full" flag input (HFULLI) is also represented in Figure 3 which is the half-full flag output (HFULLO) on an adjacent downstream P-ring interface indicating when it is safe to transmit data onto the next interface on the ring.

### 3. Microprocessor Connections

The microprocessor interface consists of a 32-bit bi-directional data bus, encoded read and write control signals, interrupt request and acknowledge, a hardware reset input and miscellaneous status and control signals.

### 4. Outputting a Packet onto the P-Ring

Referring to Figure 3, the outputting of a packet onto the P-ring will be discussed first. When the output arbitration state machine (hereinafter "OASM") is initialized, the CPU (preferably an MC 68020 microprocessor not represented in Figure 3) connected to the CPU control bus will read the status port. In this example, the status port will indicate the output buffer is clear to receive a packet of data from the CPU by way of the CPU data bus which is to be placed on the P-ring.

The CPU initiates the load output buffer cycle by setting the proper bit in the RD WR control ports. The CPU will then load the output word counter with one less than the actual word count of the packet to be transmitted. After the output word counter is loaded, the OASM will initiate an output buffer write mode, allowing the CPU to write directly to the output buffer. As the CPU writes to the output buffer, each write strobe decrements the output word counter. The output word counter supplies the proper address to the output buffer. When the output word counter reaches zero, the CPU will negate the load enable bit in the RD WR control port and the OASM will terminate the output buffer write mode and set the "load done" bit in the status port.

The OASM now monitors the P-ring to see if the output circuitry is busy with a packet pass-through, for example. Should the output circuitry be busy with a pass-through, outputting of the new packet will begin as soon as the pass-through is completed. Should there be a tie between the output request and a pass-through request, the output function will always take priority to ensure the output function cannot be locked out by an over-active ring.

Since in this example the P-ring is empty, the output circuitry will be free and the OASM will initiate the packet output sequence. The OASM inserts the beginning and end of packet flags in their proper places. The OASM does this by reloading the latched "word count minus one" into the output buffer word counter and enabling the first word of the packet and the beginning-of-packet bit into the ring output latch. At the same time the OASM generates a data out strobe (DOSTB) to travel with the data to the adjacent downstream ring interface (where it becomes DISTB) to strobe it into the FIFO on that board. It is the data in strobe (DISTB) traveling with the data that enables the P-ring to have no theoretical size limitations.

Should the receiving P-ring interface input FIFO become half-full at anytime during the transmission of data, the hysteresis counter is enabled, which is clocked by the data output strobe (DOSTB). Should the hysteresis counter reach a terminal count before the half-full indication (HFULLI) is negated, all output functions cease until the half-full flag is negated which reloads the hysteresis counter, ends the count mode, and re-enables all output functions. This ensures that no data is lost during transmission. Since in this example this was the first packet output on the P-ring, the entire packet is transmitted to the input FIFO on the adjacent downstream P-ring interface without interruption. The outputting of the packet is thus completed.

### 5. Passing a Packet

Figure 3 will continue to be referred to in order to explain the general procedure for passing a packet. The OASM handles all arbitration for the P-ring output. The IASM issues a pass-through request to the OASM whenever the input buffer cannot receive the packet detected in the input FIFO. As long as the pass through request is active, the OASM takes control of all clocking and polling of the input FIFO. When the OASM is not outputting a new packet onto the P-ring, pass-through is possible. In this mode the OASM must determine whether the IASM has extracted any of the packet from the input FIFO.

If the IASM has extracted any of the packet from the input FIFO, then the output of the ring buffer latch will contain a beginning-of-packet flag bit and the second word of the packet will be latched in the FIFO latch. If this is the case. the OASM will strobe these two words into the ring output latch and onto the P-ring before any more words are extracted from the input FIFO.

Should the word in the ring buffer latch not have a beginning-of-packet flag bit. the OASM will read words from the input FIFO until it detects a beginning-of-packet flag bit indicating the first word of a packet. The OASM will then begin strobing this input FIFO output into the ring output latch and generating the required output strobes to accompany the data. This cycle will continue until the pass-through request is negated. When this occurs. the OASM will complete the passing of any packet already in progress before returning control of the input FIFO back to the IASM.

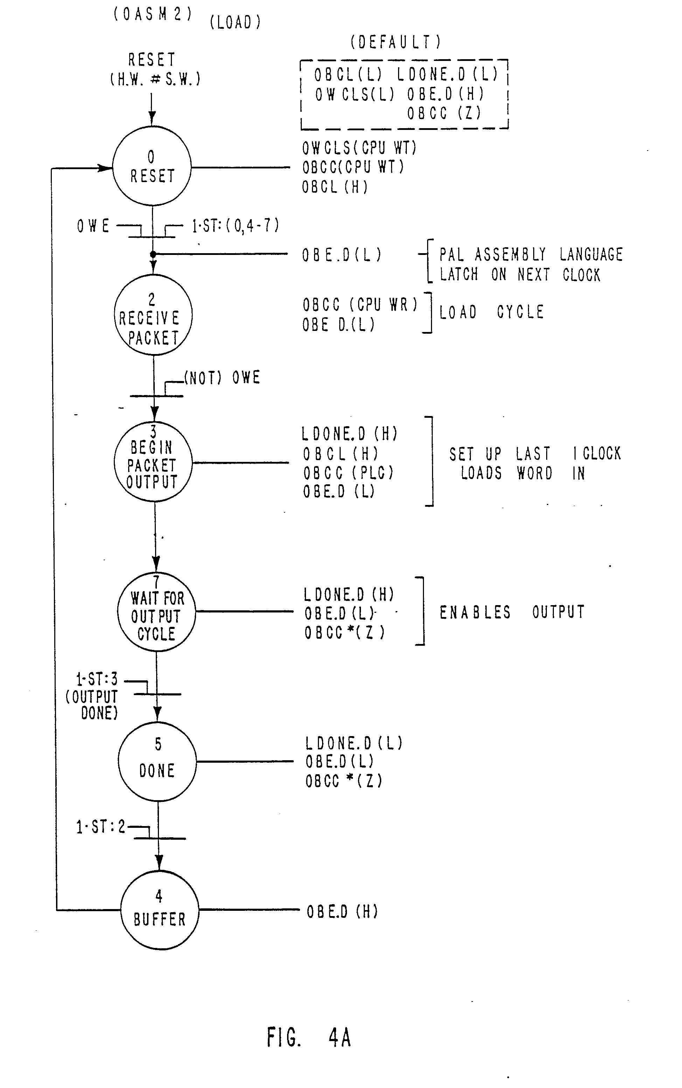

Figure 4A provides a "load output buffer" state diagram for the output arbitration state machine. In the presently preferred embodiment, the OASM is implemented using two programmable logic array devices (PAL) but other devices can be used. Provided below in Glossary A is a list of the mnemonics shown in Figure 4A. It should be noted that in this description. including the glossaries, tables, and drawings, the symbol "!" or "-" associated with the mnemonic name of a signal all indicate the "NOT" condition of the signal.

| GLOSSARY A | |
|---|---|
| (Figure A) | |
| INPUT | |
| MNEMONIC | FUNCTION |
| CPUWR | CPU Write |
| BLR | Output Buffer Load Request |
| RCLKA | Ring Clock A |
| RCLKB | Ring Clock B |
| RES | Reset |
| SB1(1:0) | OASMI State Bits |
| PTIP | Pass-Thru in Progress (OASM State Bit 2) |
| OUTPUT | |
| MNEMONIC | FUNCTION |
| LDONE | Load Done |
| OBE | Output Buffer Empty |
| OBCC | Output Buffer Counter Clock |
| OBCL | Output Buffer Counter Load |
| OWCLS | Output Word Count Latch Strobe |
| SB2(2:0) | OASM2 State |
| DCREN | Decrement Enable |

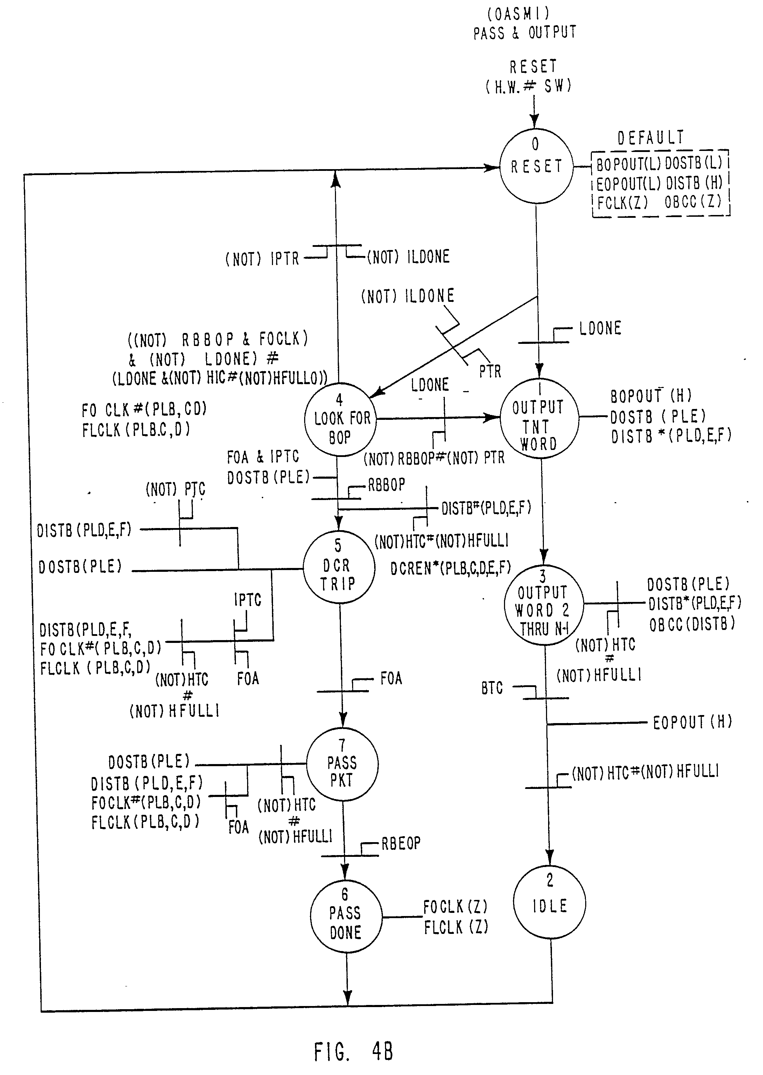

Figure 10B provides a "pass and output" state diagram for the OASM. Provided below in Glossary B is a list of the mnemonics shown in Figure 4B.

13

| GLOSSARY B | |
| --- | --- |
| (Figure 4B) | |
| INPUT | |
| MNEMONIC | FUNCTION |
| HTC | Hysterysis Terminal Count |
| FOA | FIFO Output Available |
| RCLKA | Ring Clock A |
| RCLKB | Ring Clock B |
| RCLKC | Ring Clock C |
| PTR | Pass-Thru Request |
| RES | Reset |
| BTC | Output Buffer Terminal Count |
| LDONE | Load Done |
| FCLKEN | FIFO Clock Enable |
| PTC | Pass-Thru Command |
| HFULLI | Half-Full In |
| FOCLK | FIFO Output (read) Clock |
| FLCLK | FIFO Latch Clock |
| DOSTB | Data Out Strobe |
| DISTB | Data In Strobe |
| BOPOUT | Beginning of Packet Out |
| EOPOUT | End of Packet Out |
| OUTPUT | |
| MNEMONIC | FUNCTION |
| PTIP | Pass-Thru In Progress |
| SB(1:0) | OASM1 State |
| OBCC | Output Buffer Count Clock |

## 6. Receiving a Packet

Referring again to Figure 3, when the input FIFO contains any data, this status is read by the input state machine (IASM). The IASM will cause the first word of all packets detected to be read from the input FIFO and stored in the ring buffer latch. Utilizing the ring buffer latch permits passing of the packet if the packet destination address contained in the first word does not match the address of this board and no other condition dictates that reception should be completed. When the input buffer is not empty, all packets received by input FIFO are passed around the P-ring until the buffer is available. The examples described below include the operations carried out when (1) the input buffer is available and (2) the input buffer is not available.

### a. Input Buffer is Available

When the input buffer is available, i.e., empty, the first word is enabled at the input FIFO output, passing through the now transparent FIFO latch. The output of the FIFO latch then is passed through the decrement state machine (DSM) which functions only on the second word of each packet and is active only on one P-ring interface in the P-ring. The output of the decrement state machine is presented to the input buffer and the input of the ring buffer latch.

A portion of the first word (9 bits) is presented to the now transparent input word count latch. The output of the input word count latch feeds the input of a 9-bit down counter (cdown9). The output of the 9-bit down-counter is used to address the input buffer memory. In addition, another portion of the first word, the destination address, is presented to one input of a 10-bit comparator. The other input to this comparator is the board identifier of the board on which the P-ring interface is installed. The result of this comparison is fed to the IASM to determine the next required state. As this read cycle ends, a write strobe is generated to latch the first word of the packet into the input buffer at the address equivalent to the "word count minus one value." The word count is also latched into the input word count latch and the first word is latched into the FIFO latch and ring buffer latch.

If the comparator determines that the board ID and the destination address of the packet compare, the IASM enters a state which reads the entire packet into the input buffer. As each word is enabled from the input FIFO and strobed into the input buffer, the input word counter is decremented and the output of the input word counter selects the next input buffer address. When the IASM detects the end-of-packet bit and/or the word counter reaches zero, the input cycle is terminated. Both of the aforementioned indications should occur simultaneously; should either indication be missing, an error flag is set which can only be cleared by resetting the state machines, which is under CPU control.

When the input cycle terminates, a bit is set in the status port, if enabled, and an interrupt is generated to the CPU to indicate that a packet resides in the input buffer for reception by the CPU. In addition, the IASM reloads the "word count minus one" value for the packet into the input word counter and issues a pass-through request to the OASM which remains active until the CPU has completely read all data from the input buffer and the CPU read cycle is terminated.

During the CPU read cycle, the CPU sets the input read enable bit in the RD/WR control ports and begins reading data from the input buffer. Each read strobe from the CPU is passed by the IASM to the input buffer word counter to decrement it. The CPU may count the words it receives or monitor the input buffer full status to determine when to terminate the read cycle. The input buffer full status is cleared when the input buffer word counter reaches zero, or the CPU terminates the read cycle. Thus, the entire packet need not be read to clear the input buffer.

If the comparator determines that the Board ID and the destination addresses of the packet do not compare, meaning the packet was not intended for this P-ring interface, the IASM enters a state which will read the second word of the packet out of the input FIFO. This word contains a 32-bit count which is decremented by the decrement state machine DSM once each time it passes completely around the ring. The decrement state machine preferably resides on every P-ring interface but is active only on one interface in the ring, on all others it is transparent.

The decrement state machine is enabled (when active) only while the second word of the packet is present on the output of the FIFO latch. This decremented word is strobed into the input buffer and latched into the FIFO latch at the end of this state. On all boards which the decrement state machine is disabled, the decrement state machine zero detect status to the IASM is always false. On the board on which the decrement state machine is active, the status of the decrement state machine after the second word of the packet passes through the decrement state machine determines the next state of the IASM.

When the decrement state machine status is false, indicating that the decremented word in the packet is not zero, the packet must be passed. In order to pass a packet, the IASM will issue a pass-through request to the OASM and wait in the state until pass-through is initiated by the OASM. Control is then passed to the OASM and the packet is passed as will be explained shortly.

When the decrement state machine status is true, the packet is received as if the destination address comparison had been positive.

b. Input Buffer Not Available

The procedure followed by the P-ring interface represented in Figure 3 when the input buffer is not available will be explained next. When the input buffer is not empty, no packets can be received into the input buffer. When the input buffer is not empty, all packets detected in the input FIFO are passed on to the adjacent downstream P-ring interface. The status of the input buffer is checked every time a new packet is detected. Packets continue to be passed until the input buffer is available. The ring interface always passes entire packets.

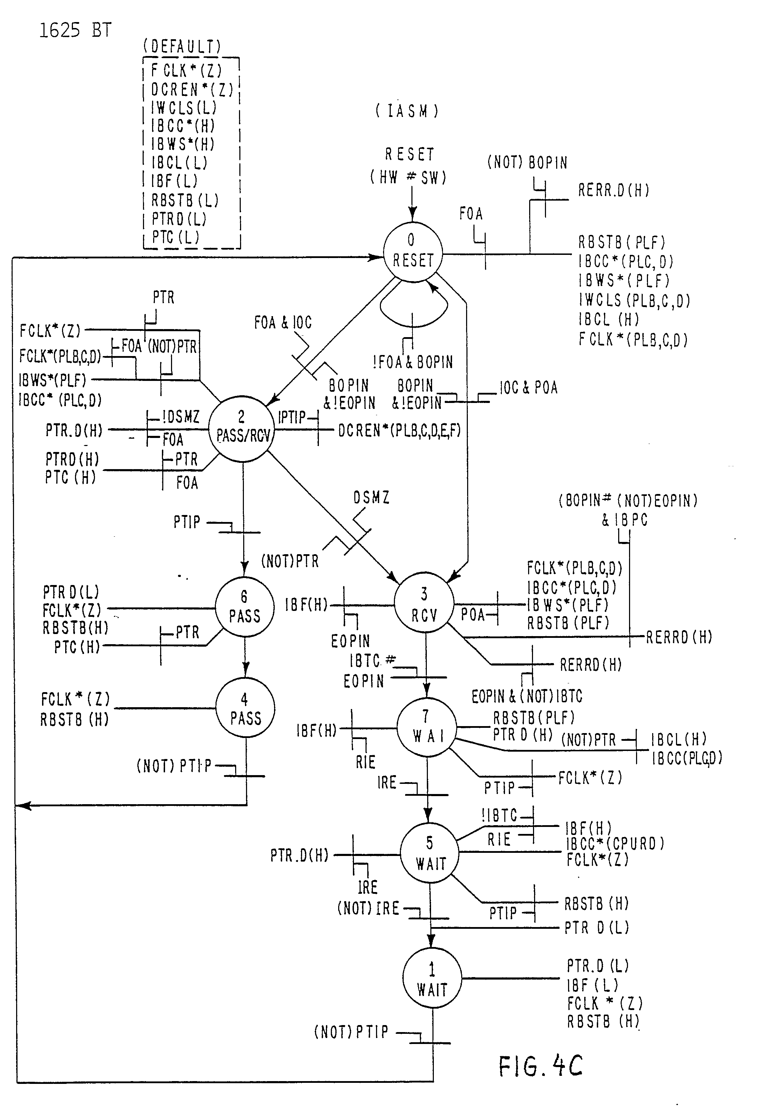

Figure 4C provides an "input" state diagram for the IASM. Provided below in Glossary C is a list of the mnemonics shown in Figure 4C.

## GLOSSARY C

| IASM1 | IASM2 | MNEMONICS | FUNCTION |
|---|---|---|---|
| X | | DSMZ | Decrement State Machine (DSM) Zero Detect |
| X | | IDC | ID Compares |
| X | | IBTC | Input Buffer Terminal Count |
| X | X | PTIP | Pass-Thru in Progress |
| | X | FCLKEN | FIFO Clock Enable |
| X | | BOPIN | Beginning of Packet In |
| X | | EOPIN | End of Packet In |
| X | X | RCLKA | Ring Clock A |
| X | | RCLKB | Ring Clock B |
| | X | RCLKC | Ring Clock C |
| | X | IBRD | Input Buffer Read |
| X | | IRE | Input Buffer Read Enable |
| X | | BRESET | Hardware Reset |
| X | | SWRES | Software Reset |

16

## GLOSSARY C
### (cont'd)

| IASM1 | IASM2 | MNEMONICS | FUNCTION |
|---|---|---|---|
| X | | NOTMT | FIFO Not Empty |
| | X | FOA | FIFO Output Available |
| | X | HFULLI | Half-Full In |
| | X | SB(2:0) | IASM1 State Bits |
| | X | PTR | Pass-Thru Request |
| | X | FOCLK | FIFO Output (read) Clock |
| | X | FLCLK | FIFO Latch Clock |
| | X | DCREN | Decrementer Enable |
| | X | IWCLS | Input Word Count Latch Strobe |
| | X | IBCC | Input Buffer Counter Clock |
| | X | IBWS | Input Buffer Write Strobe |
| X | | IBCL | Input Buffer Counter Load |
| X | | SB(2:0) | IASM2 State Bits |
| X | | RERR | Ring Error Flag |
| X | | IBF | Input Buffer Full |
| | X | RBSTB | Ring Buffer Strobe |
| X | | PTR | Pass-Thru Request |
| | X | PTC | Pass-Thru Command |
| X | | RES | Reset |
| X | | FCLKEN | FIFO Clock Enable |
| X | | FOA | FIFO Output Available |
| | X | HFULL | Buffered Half-Full In |

The IASM and OASM operate almost entirely independently of one another. The only real exception occurs when the OASM is ready to transmit and the IASM desires to pass a packet from the FIFO. Provided in Table A is the list of arbitration rules followed by the IASM and the OASM:

17

## TABLE A

| Condition | Arbitration Rule |
|---|---|
| Output in progress when pass-thru requested. | The OASM will continue outputing until done while holding the IASM in an idle state. The CPU may read the input buffer, if occupied. When the OASM is through out-putting, it will take control of the input FIFO clocking and enable the proper buffers to pass data from the input FIFO to the ring output latch until an end-of-packet flag bit is sensed in the ring buffer latch. |
| Pass-thru in progress when output ready. | The OASM will continue to pass data from the input FIFO to the ring output latch until an end-of-packet flag bit is detected in the ring buffer latch. At this time FIFO clock control will be relinquished to the IASM for possible packet reception and outputting will begin. |
| Simultaneous occurrence of output ready and pass-thru request. | Proper operation in this in-stance is dependent on set-up times in the OASM being properly satisfied. Should this be the case, output ready status will take precedence over a simultaneous pass-thru request. Should this not be the case, the reaction of the OASM will be arbitrary, yet no errors will be produced nor data lost because of this. |

Provided in Appendixes A-D is the CUPL programming code for the PAL devices which implement the IASM, the OASM, the Decrement State Machine (DSM), and the Down Counter (cdown 9) represented in Figure 3.

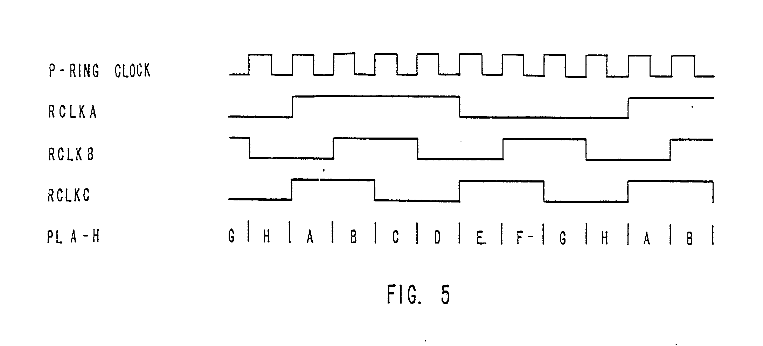

Figure 5 is a timing diagram which illustrates the relationship of the clocks and timing signals used in the state machines represented in Figure 4 and as referenced in the code listings of Appendicies A-D.

C. Conclusion

From the foregoing, it will be appreciated that the present invention provides a method and an architecture for a high speed digital computing system. The present invention allows a large number of subsystems to be closely coupled but yet operate independently of each other. The present invention provides that each of the subsystems are interconnected by a parallel data transmission pathway such that the subsystems are arranged in a ring.

In embodiments incorporating the present invention, the size of data packets output from the subsystems onto the ring is limited so as to be no greater than the subsystems memory contribution to the ring. Thus, any potential deadlock condition on the ring is avoided. Moreover, a computer system incorporating embodiments of the present invention may be expanded by the addition of many digital processing devices to meet the requirements of the particular application.

Still further. computer systems utilizing the present invention have the advantage of being configurable such that the subsystems may be assigned different tasks as the need arises. Overall, the present invention allows a high performance digital computer to operate more reliably and efficiently than previously possible.

The invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A high-speed digital computing system comprising:
a plurality of subsystem means for performing digital computation tasks:
ring connection means for connecting said plurality of subsystem means into a ring wherein parallel data transfer connections run between each adjacent subsystem means in said ring; and
wherein said subsystem means is each comprised of:
processor means for digital processing of data received by said subsystem means:
processor memory means, connected to said processor means, for storage of data to be utilized by said processor means, and for storage of data processed by said processor means;
interface means for alternately inputting data to and receiving data from said ring of subsystem means, and for configuring said data as packets, each said interface means comprising an input storage means for temporary storage of said data packets as they are input on said ring to the interface means, and output buffer means for temporary storage of said data packets as they are transferred onto said ring, said output buffer means serving to limit the size of said data packets so they do not exceed the storage capacity of the input storage means so as to insure that no data packet can be output onto said ring where the output data packet is larger than the amount of storage capacity of any available input storage means on said ring; and
wherein said input storage means of each interface means is connected by said ring connection means to. an output buffer means of a preceding subsystem in said ring.

2. A system as defined in claim 1 wherein each said interface means further comprises input control means. connected to said input storage means, for identifying when a data packet is addressed to the subsystem means of that interface means, and for controlling data transfer from said input storage means to said processor means of that subsystem means, or to an adjacent input storage means of another subsystem means in said ring.

3. A system as defined in claim 1 wherein each said interface means further comprises means for monitoring each data packet which it outputs onto said ring, so that if a data packet travels around the ring more than a predetermined number of times without having been received by another subsystem means to which said data packet was sent, then said data packet may be removed from the ring.

4. A high-speed digital computing system comprising:
an external computer;
a plurality of digital processing subsystems for performing digital computation tasks, at least one of said subsystems comprising a controller means, connected to said external computer, for controlling data transfer between said external computer and the other subsystems, each said subsystem comprising digital processor means for performing said digital computation tasks, and processor memory means, connected to said processor means, for storage of data to be utilized by said processor means, and for storage of data processed by said processor means, and wherein each said subsystem is connected by a parallel data transfer bus between adjacent subsystems so as to form a continuous ring of said subsystems; and
for each said subsystem, an interface means for outputting data onto and receiving data from said ring, and for configuring said data as packets, each said interface means comprising:
an input storage means for receiving data packets from an adjacent, preceding subsystem;
an output buffer means for transferring data packets to an adjacent, following subsystem, said output buffer means being connected to the input storage means of said following subsystem; and
wherein said output buffer means and said input storage means of each said subsystem are sized in terms of their storage capacity with respect to each other such that data packets output by an output buffer means onto said ring will not exceed the storage capacity of the input storage means of the subsystem from which said data packet is output.

19

5. The system as defined in claim 1 or claim 4 wherein said parallel data transfer bus is 32 bits wide.

6. The system as defined in claim 1 or claim 4 wherein each said processor means comprises a microprocessor and wherein said subsystems each comprise a programmable hardware booster coupled to said microprocessor through a first-in first-out (FIFO) memory device.

7. The system as defined in claim 1 or claim 4 wherein said input storage means and said output buffer means of each said interface means comprise an identically sized storage capacity.

8. The system as defined in claim 7 wherein said input storage means comprises a first-in first-out (FIFO) memory device, and wherein said output buffer means comprises a digital memory device, and wherein each said device is 34 bits wide and 1024 words deep.

9. The system as defined in claim 1 or claim 4 wherein each said interface means further comprises output control means, connected to said output buffer means, for synchronizing the transfer of a data packet between said output buffer means and said input storage means of said following subsystem.

10. The system as defined in claim 9 wherein each said interface means further comprises means for communicating from said input storage means a status signal to said buffer means of said preceding subsystem from which a data packet is being sent, said status signal indicating when the input storage means is filled with data to a predetermined amount of its storage capacity, and wherein each said control means receives a status signal from an input storage means of an adjacent, following subsystem, said control means thereafter initiating a count so that if available storage capacity of the input storage means of the following subsystem does not increase before said count expires, then further data input to said input storage means of the following subsystem is temporarily halted by said control means.

11. The system as defined in claim 10 wherein said output control means comprises an output arbitration state machine.

12. The system as defined in claim 10 wherein said output control means further comprises an output word counter connected to said output arbitration state machine.

13. The system as defined in claim 12 wherein each said interface means further comprises a first latch connected to the input of said output word counter, a second latch connected to said output buffer means on an input side thereof, and a third latch connected to said output buffer means on an output side thereof.

14. The system as defined in claim 11 wherein said output control means further comprises a counter connected to said output arbitration state machine, said counter comprising means for receiving said status signal which initiates said count.

15. The system as defined in claim 4 wherein each said interface means further comprises means for monitoring each data packet which is output by the subsystem of that interface means onto said ring, so that if a data packet returns to the subsystem from which it was sent more than a predetermined number of times without having been received by another subsystem to which said data packet was sent, then the data packet may be removed from the ring.

16. The system as defined in claim 4 wherein each said interface means further comprises input control means, connected to said input storage means, for identifying when a data packet is addressed to the subsystem of that interface means, and for controlling data transfer from said input storage means to the addressed processor means of that subsystem or to a following subsystem if the addressed processor means of that subsystem is busy.

17. The system as defined in claim 16 wherein said input control means comprises an input arbitration state machine.

18. The system as defined in claim 17 wherein said input control means further comprises an input word counter connected on an output side of said input storage means and connected on an input side of said input arbitration state machine, and an input buffer connected on said output side of said input storage means and connected on said input side of said input arbitration state machine.

19. An interface for providing parallel transfer data connections between a plurality of processors each containing one such interface, said processors being connected one to another to form a ring wherein packets of data may be transferred around the ring from one processor to another, said interface comprising:

input storage means for temporary storage of said data packets as they are input to one processor from another processor of said ring;

output buffer means for temporary storage of said data packets as they are transferred from one processor of said ring to the next, said output buffer having a storage capacity sized so as to limit the size of a data packet output therefrom such that no data packet can be output onto said ring where the output data packet is larger than the amount of storage capacity of any available input storage means of the processors on said ring;

input control means, connected to said input storage means, for identifying whether data packet is

20

addressed to the processor receiving the data packet at its input storage means, and if so, thereafter transferring the data packet to the addressed processor and permitting asynchronous processing of the data packet relative to other processors in the ring, and if not, preparing the data packet for transfer to the next processor in the ring; and

output control means, connected to said output buffer means, for synchronously transferring data packets from the output buffer means of one processor to the input storage means of the next.

20. An interface as defined in claim 19 further comprising means for monitoring each data packet output onto said ring, so that if a data packet returns to the processor from which it was sent more than a predetermined number of times without having been received by another processor on the ring to which said data packet was sent, then said data packet may be removed from the ring.

21. An interface as defined in claim 20 further comprising means for communicating from said input storage means a status signal to the output buffer means from which a data packet is being sent to said input storage means, said status signal indicating when the input storage means is filled with data to a predetermined amount of its storage capacity, and wherein each said output control means comprises means for receiving a status signal from an input storage means so that as one processor transfers a data packet to the next processor in the ring, if available storage capacity of the input storage means of said next processor is less than said predetermined amount then further data input to said next processor is temporarily halted by said output control means.

22. An interface as defined in claim 19 wherein said input storage means comprises a first-in first-out (FIFO) memory device.

23. An interface as defined in claim 22 wherein said input storage means and said output buffer means have identically sized storage capacities.

24. An interface as defined in claim 19 wherein said output control means comprises an output arbitration state machine and wherein said output control means further comprises an output word counter connected to said output arbitration state machine.

25. An interface as defined in claim 24 further comprising a first latch connected to the output of said output word counter, a second latch connected to said output buffer means on an input side thereof, and a third latch connected to said output buffer means on a output side thereof.

26. An interface as defined in claim 19 wherein said input control means comprises an input arbitration state machine and wherein said input control means further comprises an input word counter connected on an output side of said input storage means and connected on an input side of said input arbitration state machine, and an input buffer connected on said output side of said input storage means and connected on said input side of said input arbitration state machine.

27. A method of distributing digital information among a plurality of processors in a digital computing system comprising a plurality of memory buffers connected to one another to form a ring digital communication path, the method comprising the steps of:

outputting a first packet of digital information from a first processor onto the ring communication path, the first packet including a first destination address;

limiting the size of the first packet such that the entire first packet may be stored in any one of the memory buffers;

comparing the destination address of the first packet with the address of a second processor; and

passing the first packet past the second processor if the destination address of the first packet does not match the second processor address; and

inputting the first packet into the second processor if the destination address of the first packet matches the address of the second processor.

28. A method of distributing digital information among a plurality of processors as defined in claim 27 further comprising the step of transmitting a synchronization strobe signal from the first processor to the second processor to accompany the pass-through of the first packet and synchronize the transfer of the packet between the first processor and the second processor on the ring digital communication path.

29. A method of distributing digital information among a plurality of processors as defined in claim 27 wherein the first packet includes a trip count word, the method further comprising the step of decrementing the trip count word as the packet passes by the second processor and the step of removing the packet from the ring digital communication path when the trip count word has been decremented to a given value.

30. A method of distributing digital information among a plurality of processors as defined in claim 27 wherein the step of outputting a first packet from a first processor onto the ring communication path comprises the steps of:

halting pass through of any other packets on the ring communication path; and

inserting the first packet onto the ring communication path.

21

FIG. 1

1625 BT

EP 0 367 182 A2

1625 BT

FIG. 2A

FIG. 2B

1625 BT

FIG. 3-1

1625 BT

FIG. 3-2

1625 BT

(OASM 2)  (LOAD)

RESET
(H.W. ≠ S.W.)

(DEFAULT)

OBCL(L)  LDONE.D (L)
OWCLS(L)  OBE.D (H)
OBCC (Z)

**0 RESET**

OWCLS(CPU WT)
OBCC(CPU WT)
OBCL (H)

OWE ┤ ├ 1·ST:(0,4-7)

OBE.D(L) ┤ PAL ASSEMBLY LANGUAGE
LATCH ON NEXT CLOCK

**2 RECEIVE PACKET**

OBCC (CPU WR) ┐ LOAD CYCLE
OBE D.(L) ┘

(NOT) OWE

**3 BEGIN PACKET OUTPUT**

LDONE.D (H) ┐
OBCL (H) │ SET UP LAST  CLOCK
OBCC (PLC) │ LOADS WORD IN
OBE.D (L) ┘

**7 WAIT FOR OUTPUT CYCLE**

LDONE.D (H) ┐
OBE.D (L) │ ENABLES OUTPUT
OBCC *(Z) ┘

1·ST:3
(OUTPUT
DONE)

**5 DONE**

LDONE.D (L)
OBE.D (L)
OBCC *(Z)

1·ST:2

**4 BUFFER**

OBE.D (H)

FIG. 4A

1625 BT

(OASMI)
PASS & OUTPUT

RESET
(H.W. # SW)

**0 RESET**

DEFAULT
BOPOUT(L) DOSTB(L)
EOPOUT(L) DISTB(H)
FCLK(Z) OBCC(Z)

(NOT) IPTR — (NOT) ILDONE

(NOT) ILDONE

LDONE

PTR

((NOT) RBBOP & FOCLK)
& (NOT) LDONE) #
(LDONE &(NOT) HIC#(NOT)HFULL0))

FO CLK #(PLB,CD)
FLCLK (PLB.C,D)

LDONE

**4 LOOK FOR BOP**

**OUTPUT TNT WORD**

BOPOUT (H)
DOSTB (PLE)
DISTB *(PLD,E,F)

FOA & IPTC
DOSTB (PLE)

(NOT) RBBOP#(NOT) PTR

RBBOP

DISTB#(PLD,E,F)

(NOT) PTC

DISTB(PLD,E,F)

DOSTB(PLE)

**5 DCR TRIP**

(NOT)HTC#(NOT)HFULLI

DCREN*(PLB,C,D,E,F)

**3 OUTPUT WORD 2 THRU N-I**

DOSTB(PLE)
DISTB*(PLD,E,F)
OBCC(DISTB)

IPTC

DISTB(PLD,E,F,
FO CLK#(PLB,C,D)
FLCLK (PLB,C,D)

(NOT)HTC
#
(NOT)HFULLI

FOA

(NOT) HTC
#
(NOT)HFULLI

FOA

BTC

EOPOUT (H)

**7 PASS PKT**

DOSTB(PLE)
DISTB (PLD,E,F)
FOCLK#(PLB,C,D)
FLCLK(PLB,C,D)

(NOT) HTC
#
(NOT) HFULLI

FOA

(NOT) HTC#(NOT) HFULLI

RBEOP

**6 PASS DONE**

FOCLK (Z)
FLCLK (Z)

**2 IDLE**

FIG. 4B

1625 BT

(DEFAULT)
```
F CLK*(Z)
DCREN*(Z)
IWCLS(L)
IBCC*(H)
IBWS*(H)
IBCL(L)
IBF(L)
RBSTB(L)
PTRD(L)
PTC(L)
```

(IASM)

RESET
(HW # SW)

(NOT) BOPIN
RERR.D(H)

FOA

RBSTB(PLF)
IBCC*(PLC,D)
IBWS*(PLF)
IWCLS(PLB,C,D)
IBCL(H)
FCLK*(PLB,C,D)

**0 RESET**

!FOA & BOPIN

FOA & IOC

BOPIN &!EOPIN     BOPIN &!EOPIN     IOC & POA

PTR

FCLK*(Z)
FCLK*(PLB,C,D)     FOA (NOT)PTR
IBWS*(PLF)
IBCC*(PLC,D)

PTR.D(H)     !DSMZ     IPTIP
FOA          DCREN*(PLB,C,D,E,F)

PTRD(H)     PTR
PTC(H)      FOA

**2 PASS/RCV**

DSMZ

(BOPIN # (NOT)EOPIN)
& IBPC

PTIP

(NOT)PTR

PTR D(L)
FCLK*(Z)
RBSTB(H)     PTR
PTC(H)

**6 PASS**

IBF(H)     **3 RCV**     POA

FCLK*(PLB,C,D)
IBCC*(PLC,D)
IBWS*(PLF)
RBSTB(PLF)

RERRD(H)

EOPIN
IBTC. #
EOPIN

RERRD(H)

EOPIN & (NOT)IBTC

FCLK*(Z)
RBSTB(H)

**4 PASS**

IBF(H)     **7 WAI**     RBSTB(PLF)
PTR D(H)     (NOT)PTR     IBCL(H)
RIE                                  IBCC(PLCD)

(NOT)PTIP

IRE     PTIP     FCLK*(Z)

!IBTC     IBF(H)
RIE       IBCC*(CPURD)
FCLK*(Z)

PTR.D(H)     **5 WAIT**

IRE
(NOT)IRE     PTIP     RBSTB(H)
PTR D(L)

**1 WAIT**

PTR.D(L)
IBF(L)
FCLK*(Z)
RBSTB(H)

(NOT)PTIP

FIG.4C

1625 BT

P - RING CLOCK

RCLKA

RCLK B

RCLKC

PL A - H    G | H | A | B | C | D | E | F - | G | H | A | B |

## FIG. 5